(19) Europäisches Patentamt
European Patent Office
Office européen des brevets

(11) EP 3 204 171 B1

## (12) EUROPEAN PATENT SPECIFICATION

(45) Date of publication and mention
of the grant of the patent:
**29.04.2020 Bulletin 2020/18**

(21) Application number: **15794220.2**

(22) Date of filing: **07.10.2015**

(51) Int Cl.:
***B08B 3/00*** *(2006.01)*    ***C08B 1/00*** *(2006.01)*
***C08J 11/04*** *(2006.01)*

(86) International application number:
**PCT/GB2015/052926**

(87) International publication number:
**WO 2016/055782 (14.04.2016 Gazette 2016/15)**

## (54) METHOD OF PRODUCING NANOCELLULOSE

VERFAHREN ZUR HERSTELLUNG VON NANOCELLULOSE

PROCÉDÉ DE PRODUCTION DE NANOCELLULOSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.10.2014 GB 201417793**

(43) Date of publication of application:
**16.08.2017 Bulletin 2017/33**

(73) Proprietor: **Brunel University London
Uxbridge Middlesex UB8 3PH (GB)**

(72) Inventors:
 • **FAN, Mizi
 Uxbridge
 Middlesex UB8 3PH (GB)**
 • **DASONG, Dai
 Fujian Province, 350002 (CN)**

(74) Representative: **Williams Powell
11 Staple Inn
London WC1V 7QH (GB)**

(56) References cited:
 CN-A- 102 690 358    CN-A- 102 964 454
 CN-A- 103 214 586    CN-A- 104 004 521

 • **DASONG DAI ET AL: "Fabrication of
 nanocelluloses from hemp fibers and their
 application for the reinforcement of hemp fibers",**
 INDUSTRIAL CROPS AND PRODUCTS., vol. 44, 1
 January 2013 (2013-01-01), pages 192-199,
 XP055237906, NL ISSN: 0926-6690, DOI:
 10.1016/j.indcrop.2012.11.010
 • **QINGQING LI ET AL: "Molecularly thin
 nanoparticles from cellulose: isolation of
 sub-microfibrillar structures",** CELLULOSE,
 KLUWER ACADEMIC PUBLISHERS
 (DORDRECHT), NL, vol. 16, no. 6, 17 June 2009
 (2009-06-17), pages 1025-1032, XP019767551,
 ISSN: 1572-882X, DOI:
 10.1007/S10570-009-9329-6
 • **QINGQING LI, SEAN MC GINNIS, CUTTER
 SYNDOR, ANTHONY WONG, SCOTT
 RENNECKAR: "Nanocellulose Life Cycle
 Assessment",** ACS SUSTAINABLE CHEM. ENG.,
 no. 1, 22 May 2013 (2013-05-22), pages 919-928,
 XP002752495,

Remarks:
The file contains technical information submitted after the application was filed and not included in this specification

**Description**

The present invention relates to a method of producing nanocellulose and to a method of recycling cellulosic material.

Cellulose is one of the most abundant materials in the world. Recently, with the development of nanotechnology, extraction of nanocellulose from cellulose and the effective application of nanocellulose have become two of the most important investments across many industrial sectors. Nanocellulose is a material composed of nanoscale cellulose fibrils. Nanocellulose has advantages relating to its high specific surface and mechanical properties compared to natural fibres. These advantages have led to nanocellulose being a versatile nanomaterial for a wide range of potential applications.

There are two main known methods of manufacture of nanocellulose: 1) acid hydrolysis (Nickerson (1941) Industrial & Engineering Chemistry Analytical Edition 13, 423-6; Bondeson et al. (2006) Cellulose 13, 171-80; Sharma et al. (2012) RSc. Adv. 2, 6424-37; and Jiang & Hsieh (2013) Carbohyd. Polym. 95, 32-40), and 2) mechanical defibrillation (US 4,341,807; US 4,378,381; Stenstad et al. (2008) Cellulose 15, 35-45; Montanari et al. (2005) Macromolecules 38, 1665-71; JP 2008-001728; WO 2009/021688 and Besbes et al. (2011) Carbohyd. Polym. 84, 975-83).

Sulphuric acids have been commonly used to produce nanocellulose since Nickerson first used this method in the early 1940s. Sulphuric acid hydrolysis can provide a highly stable suspension with high negative charge due to the introduction of sulphate ester groups on the surface of crystallites. However, the low yield of nanocellulose (Bondeson et al. (2009) and Sharma et al. (2012)) obtained using acid hydrolysis limits the possibility of scaling up nanocellulose production to industrial levels. For example, Bondeson et al. (2006) obtained a yield of about 30% nanocellulose by acid hydrolysis from microcrystalline cellulose (MCC). From other sources, the yield tends to be much lower. For example, from ryegrass the yield is only 0.0256% (Sharma et al. (2012)), for rich straw, the yield is 16.9% (Jiang & Hsieh (2013)). In addition, the necessary high concentration of acid (around 60%) and the high acid/solid ratio (more than 10) are major issues, which limit the acid hydrolysis to laboratory level.

Mechanical defibrillation was developed firstly in 1980s by Turbak et al. (US 4,341,807; US 4,378,381). This fabrication method can result in longer and entangled nanoscale cellulose elements leading to stronger networks and gels. However, this fabrication method also tends to damage the microfibril structure by reducing the molar mass and degree of crystallinity. In addition, a higher number of passes through a mechanical homogeniser increases the energy consumption for disintegration and the low zeta-potential (-10 mv) (Stenstad et al. (2008)). This also indicates that mechanical defibrillation is not an ideal method.

After 22 years, pretreatment in a mechanical defibrillation method was first reported by Montanari et al. (2005). Since then, more pre-treatment methods have been reported (JP 2008-001728; WO 2009/021688; Besbes et al. (2011)). The main agent used in pretreatment is TEMPO-NaBr-NaClO. This system introduces carboxylic acid groups in the C6 position of the glucose unit and can produce fibrillated cellulose fibres for the subsequent mechanical treatment. It has been reported that this pretreatment can reduce energy consumption (JP 2008-001728) and result in a high yield of nanocellulose (WO 2009/021688) by using wood pulp as the raw material. However, non-wood lignocellulosic fibres resulted in a yield of only 19.7% (Jiang & Hsieh (2013)). TEMPO can only be used to oxidise polysaccharide; therefore, for TEMPO pretreatment, the removal of non-cellulose composition is necessary, which results in a low yield. In addition, the high price of TEMPO increases the cost of fabrication, inclusion of TEMPO in the nanocellulose increases the cost of obtaining pure nanocellulose, and the treatment of liquid waste is a further issue.

Another form of pretreatment, namely, enzymatic pretreatment, was employed by Henriksson et al. (2007) (Eur. Polym. J. 43, 3434-41). This environmentally friendly method can increase the reactivity and swelling of cellulosic fibres and give higher average molmass and larger aspect ratio than nanocellulose resulting from acidic pretreatment. However, low zeta potential (-15.2 mv) and low yield (12.3%) (Satyamurthy & Vigneshwaran (2013) Enzyme Microb. Tech. 52, 20-5) still limit the potential production of nanocellulose.

The present invention seeks to provide an improved method of producing nanocellulose.

According to an aspect of the present invention, there is provided a method of producing nanocellulose as specified in claim 1.

Using this method nanocellulose can be fabricated directly from natural fibres. In embodiments, the method produces nanocellulose with a high yield, provides a versatile nanocellulose that has long stability, improves the mechanical performance of natural fibres up to 79% and can be used to increase the tensile strength of paper up to 76%. Preferred embodiments of the method take advantage of a chemical agent to reduce the cost and the waste liquid.

The method may include isolating the nanocellulose produced. This may be carried out by centrifugation.

The oxidation is preferably carried out using an oxidant, for example a chemical oxidant.

The oxidant has higher oxidising properties than TEMPO but lower than sulphuric acid. NaClO is disclosed as an oxidant. NaClO can oxidise the raw fibres without heavy degradation of the fibres. Therefore, it can help improve the yield. NaClO oxidation degradation can also result in an increase in zeta potential. NaClO is a cheaper chemical material, so it can reduce the cost.

Other oxidants disclosed include $NaClO_2$ (in an alkaline swelling agent system) and $H_2O_2$ (in an acidic swelling agent system). $H_2O_2$ is one of the main bleaching agents used commercially. As its oxidation product is $H_2O$, nanocellulose produced this way can be used in the food industry.

The chemical oxidant may be provided at a concentration of from 10% to 20% by weight of dried fibres of cellulosic raw material.

The swelling agent may be acidic or alkaline.

The swelling agent may include $Na_2CO_3$ and/or KOH. In an embodiment the swelling agent includes NaOH and NaCl.

Preferably the swelling agent is included at a concentration of from 2% to 16% by weight of dried fibres of cellulosic raw material. The swelling agent may be at a concentration of approximately 4%.

The oxidation and sonication step may be carried out at a temperature of at least 55°C. It may be carried out at a temperature of no more than 80°C. Preferably the oxidation and sonication step is carried out at a temperature within the range from 55 °C to 80 °C.

The oxidation and sonication step may be carried out from 2 to 6 hours.

The cellulosic raw material may be non-wood lignocellulosic fibres, for example hemp fibres, flax fibres, or jute fibres.

The fibres may have a length of 0.01-2cm.

In an embodiment the cellulosic raw material is sawdust, which may have a particle size of less than 60 $\mu$m.

The concentration of the cellulosic raw material in the oxidation reaction solution may be 5% (w/w) or less.

The average size distribution of the nanocellulose obtainable by the method specified above may be approximately 100nm.

The nanocellulose may have a crystallinity of approximately 86.6%.

According to another aspect of the present invention there is provided a method of recycling cellulosic material as specified in claim 13.

The cellulosic material to be recycled may be paper, card, cardboard or wood. For example, the cellulosic material to be recycled may be office waste, old newsprint, old corrugated case, softwood or hardwood.

The nanocellulose may be added to the pulp with one or more additives.

The additive may be a filler, a retention aid and/or an emulsion. For example, the additive may be a calcium carbonate filler, a polyacrylamide retention aid and/or an alkyl ketene dimer emulsion. The additive may be a low to medium cationic charge high molecular weight polyacrylamide.

According to embodiments of the nanocellulose production disclosed herein, nanocellulose can be produced directly from lignocellulosic fibres. In addition, nanocellulose can be produced with high yield.

According to embodiments of the nanocellulose production method of the present invention, oxidised nanocellulose can be produced. In addition, this oxidised nanocellulose can have high stability and can be stored for a long period of time before use.

There is disclosed a novel nanocellulose production method, including:

(1) an oxidation/sonication treatment step to defibrillate raw fibres, oxidant and swelling agent being used in this step; and

(2) a cleaning step using a centrifuge to separate nanocellulose from the raw suspension after degradation.

NaClO or $H_2O_2$ may be used as an oxidant in the first step.

NaOH or a mixture of NaOH and NaCl may be used as a swelling agent in the first step.

In an embodiment the heating temperature is around 55-75 °C and the heating time is around 2-6 h.

The novel nanocellulose production method can result in a yield of 42%-54%.

The average size distribution of the nanocellulose may be around 100 nm.

The nanocellulose produced by the method may have a zeta potential of around -14.3 mV after two years.

The crystallinity of the nanocellulose may be around 86.6%.

Novel procedures may be applied to modify and improve the properties of recycled fibres; office waste (Office W); old newsprint (ONP); old corrugated case (OCC); unbleached softwood kraft pulp (UBSK); bleach hardwood kraft pulp (BHK).

The tensile strength of the treated fibres may be increased by 11-26%.

The tensile energy absorption (TEA) of the treated fibres may be increased 27-111%. Treating paper with these fibres results in paper having an increased durability under tensile loading.

The stretch of the treated fibres may be increased by 21-41%. This again results in paper having increased durability.

The nanocellulose may be applied to old corrugated case (OCC) material that includes various additives, such as 1) calcium carbonate filler; 2) polyacrylamide retention aid (Percoll 292); and/or 3) alkyl ketene dimer (AKD) emulsion.

Depending on the type of filler and additives selected, tensile strength, TEA and stretch of the treated fibres may be increased up to 75%.

The nanocellulose fibres can thus be used in improved methods of producing recycled paper products. For the purposes of the present application, the term "paper" is intended to include all types of paper-based products such as card and cardboard.

Embodiments of the present invention are described below by way of example only, with reference to the accompanying drawings, in which:

Figure 1 is a schematic representation of a method of producing nanocellulose;
Figure 2 is a graph showing the effect of dosage of swelling agent on yield of nanocellulose;
Figure 3 shows the number size distribution from nanoparticle tracking analysis (NTA) video of nanocellulose;
Figure 4 shows the zeta potential of nanocellulose;
Figure 5 is an x-ray diffractogram of hemp yarns and nanocellulose; and
Figure 6 illustrates a paper sheet forming unit.

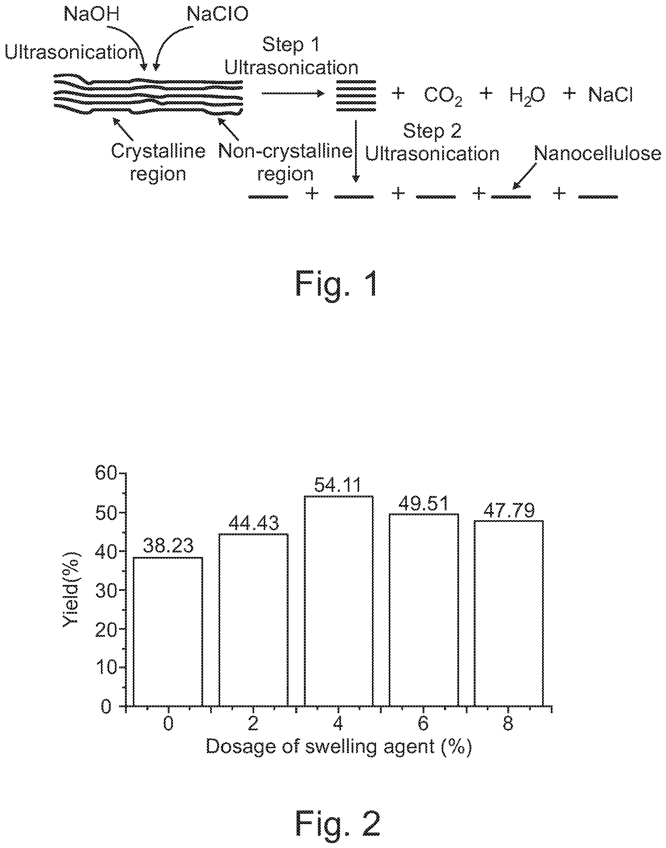

The nanocellulose production method disclosed herein includes an oxidation/sonication treatment step to degrade raw fibres from cellulosic raw material. This is followed by a cleaning step, in which a centrifuge is preferably used to separate nanocellulose from the raw suspension after degradation. Figure 1 is a schematic drawing of a method of oxidation of cellulosic fibres using sodium hypochlorite. As shown in Figure 1, fibres from a cellulosic raw material are oxidised and sonicated. The cellulosic raw material may comprise non-wood lignocellulosic fibres, such as hemp fibres, flax fibres or jute fibres, which may have a length of 0.01-2 cm. In an embodiment, the cellulosic raw material may be sawdust, which may have a particle size of 60 $\mu$m. The concentration of the cellulosic raw material in the oxidation reaction solution may be around 5% (w/w) or less.

Oxidation and sonication are carried out simultaneously. In the illustrated method, the fibres are oxidised using a chemical oxidant. The oxidant is preferably more oxidising than TEMPO but less oxidising than sulphuric acid. The oxidant may include NaClO. In another example the oxidant may include $H_2O_2$. In this method, a swelling agent, which may include NaOH, is also included in the reaction. In an embodiment the swelling agent may include NaOH and NaCl.

The cellulosic raw material may comprise natural fibres including 1) non-wood lignocellulosic fibres (for example, hemp fibres, flax fibres, jute fibres and so on) or 2) small sawdust particles (for example, less than 60 $\mu$m). The concentration of natural fibres is preferably 5% or less based on the weight of the reaction solution. For non-wood lignocellulosic fibres, a cutting mill (with speed around 1500-3000 $min^{-1}$) can be used to chop the fibres to a final length of around 0.01-2 cm. For sawdust, the small particles may be obtained by using a rotor mill, ball mill or the combination of both types of mills.

The chemical oxidant, such as NaClO, may be included at a concentration of around 10%-20% (by the weight of dried fibres). The swelling agent, such as NaOH, may be at a concentration of around 2%-16%, for example at a concentration of around 4% (by the weight of dried fibres). The reaction may be carried out at at least 50 °C and/or no more than 80 °C. The temperature of the reaction may be controlled to around 55-80 °C. The duration of the oxidation/sonication was around 2-6 h.

In preferred embodiments, NaClO is added in small amounts, for example 20% or less by weight of dried fibres of cellulosic raw material, and slowly (enough to reach a final concentration in the reaction mixture of 1.2% or less over around 30 mins or so) to avoid the release of $Cl_2$. Light NaOH is used as swelling agent to improve the penetration of NaClO.

As illustrated in Figure 1, the fibres in the cellulosic raw material contain crystalline and non-crystalline regions. In step 1, the combination of oxidation and sonication results in removal of non-crystalline regions. In step 2, sonication results in the separation of nanocellulose from the crystalline regions in the cellulose. The process also results in the formation of relatively harmless carbon dioxide, water and sodium chloride (where NaClO is used as the oxidant). As shown in Figure 1, after oxidation, NaClO is reduced to NaCl which is non-polluting to the environment. In addition, as shown in Figure 1, the ultrasonication helps the penetration of NaClO and separates nanocellulose from crystalline region.

The sonication has two further main functions. Firstly, it improves the oxidation rate allowing a low concentration of oxidant to be used. Secondly, it improves the penetration of swelling agent.

In order to separate the salt from the nanocellulose, centrifugation was used in a second step. The speed of centrifuge was quicker than 8500 rpm. The separation of salts by centrifugation was repeated until no deposit appears on the bottom of centrifugal tube (the total time of wash is around 2-8 h).

Carrying out the method above can produce a yield of nanocellulose of around 42% to 54%, which is an improvement over the prior art methods. The average length of the nanocellulose fibres obtained is approximately 100nm. After two years, the average value of the zeta potential for the nanocellulose obtained is around -14.3mv, indicating incipient stability. The crystallinity of the nanocellulose obtained is around 86.6%.

The nanocellulose obtained using the method disclosed in this application can be used to modify and improve the properties of recycled fibres, office waste, old newsprint, old corrugated case, unbleached softwood kraft pulp and bleached hardwood kraft pulp. For example, it can be added to a pulp of cellulosic material to be recycled, before forming the pulp into a sheet. The cellulosic material to be recycled may be paper, card, cardboard or wood.

The nanocellulose can increase the tensile strength of the treated fibres by at least 11%. The tensile energy absorption of the treated fibres can be increased by at least 27%. The stretch of the treated fibres can be increased by at least 21%.

In some embodiments, the nanocellulose may be applied to material for recycling, such as old corrugated case material, with one or more additives. A retention aid, for example, a polyacrylamide retention aid such as Percoll 292 may be included.

The tensile strength, tensile energy absorption and stretch of the treated fibres may increase up to 75% depending on the fillers and additives used.

The following provides a more detailed explanation of the present invention through Examples thereof. However, the present invention is not limited by these Examples.

## EXAMPLES

Comparative Example 1

In this Example, response surface methodology (RSM) based on a five-level-four-variable (hydrolysis time, hydrolysis temperature, dosage of swelling agent and dosage of oxidant) central composite design (CCD) was applied to design the experiment. The range and the levels of the test variables are given in Table 1. It should be mentioned that the dosage of swelling agent and oxidant are presented by weight of dried fibres.

Table 1

| Variables | Range and levels | | | | |
|---|---|---|---|---|---|
| | -2 | -1 | 0 | 1 | 2 |
| A-Time (h) | 2 | 3 | 4 | 5 | 6 |
| B-Temperature (°C) | 55 | 60 | 65 | 70 | 75 |
| C-Dosage of swelling agent (NaOH) (%) | 8 | 10 | 12 | 14 | 16 |
| D-Dosage of oxidant (NaClO) (%) | 20 | 40 | 60 | 80 | 100 |

In these experiments, 14.2365g of dried chopped hemp fibres were used each time, and the final concentration of hemp fibre pulp was controlled at 5 %. Sodium hydroxide and sodium hypochlorite were added as swelling agent and oxidant, respectively. The mixture was then continuously stirred at normal speed (900 rpm) combined with continuous sonication under various hydrolysis temperatures and times.

The obtained suspension was then centrifuged (8500rpm) to separate salts from nanocellulose suspension. To further separate the salt from the nanocellulose suspension, dialysis was carried out. The suspension was stored in pretreated dialysis tubing (305 mm length, 49.5 mm diameter). The tubing was pretreated with the following procedure as described: the tubing was soaked in hot solution (80°C) containing 1% EDTA and 0.3% sodium sulfide for one minute; then the tubing was washed with 60°C distilled water for two minutes and finally washed with distilled water at room temperature (25°C) for three hours. The tubing was subjected to dialysis in a 4xL container filled with distilled water, the distilled water was changed every 24 hours, in order to separate salt and pure nanocellulose. The dialysis process was continued for seven days. The yield of nanocellulose was calculated as follows:

$$Yield / \% = \frac{W_t}{W_0} \times 100$$

where $W_0$ is the mass of raw hemp yarn and $W_t$ is the mass of nanocellulose.

Table 2 shows the central composite design experimental data values for RSM.

Table 2

| Std | Time (h) | Temperature (°C) | Dosage of NaOH (%) | Dosage of NaClO (%) | Yield (%) |
|---|---|---|---|---|---|
| 1 | 3 | 60 | 10 | 40 | 9.03 |
| 2 | 5 | 60 | 10 | 40 | 20.55 |

(continued)

| Std | Time (h) | Temperature (°C) | Dosage of NaOH (%) | Dosage of NaClO (%) | Yield (%) |
|---|---|---|---|---|---|
| 3 | 3 | 70 | 10 | 40 | 17.54 |
| 4 | 5 | 70 | 10 | 40 | 23.38 |
| 5 | 3 | 60 | 14 | 40 | 10.72 |
| 6 | 5 | 60 | 14 | 40 | 8.22 |
| 7 | 3 | 70 | 14 | 40 | 14.03 |
| 8 | 5 | 70 | 14 | 40 | 15.97 |
| 9 | 3 | 60 | 10 | 80 | 27.90 |
| 10 | 5 | 60 | 10 | 80 | 31.54 |
| 11 | 3 | 70 | 10 | 80 | 34.31 |
| 12 | 5 | 70 | 10 | 80 | 32.46 |
| 13 | 3 | 60 | 14 | 80 | 21.07 |
| 14 | 5 | 60 | 14 | 80 | 21.58 |
| 15 | 3 | 70 | 14 | 80 | 15.61 |
| 16 | 5 | 70 | 14 | 80 | 14.46 |
| 17 | 2 | 65 | 12 | 60 | 23.63 |
| 18 | 6 | 65 | 12 | 60 | 27.03 |
| 19 | 4 | 55 | 12 | 60 | 12.95 |
| 20 | 4 | 75 | 12 | 60 | 17.09 |
| 21 | 4 | 65 | 8 | 60 | 42.02 |
| 22 | 4 | 65 | 16 | 60 | 25.50 |
| 23 | 4 | 65 | 12 | 20 | 2.52 |
| 24 | 4 | 65 | 12 | 100 | 17.55 |
| 25 | 4 | 65 | 12 | 60 | 27.73 |
| 26 | 4 | 65 | 12 | 60 | 27.88 |
| 27 | 4 | 65 | 12 | 60 | 27.10 |
| 28 | 4 | 65 | 12 | 60 | 27.66 |
| 29 | 4 | 65 | 12 | 60 | 27.77 |
| 30 | 4 | 65 | 12 | 60 | 27.79 |

Analysis of the experimental data shown in Table 2 was performed by the Design-Expert Version 8.0.6 software. Numerical optimisation was carried out by Design-Expert software to optimise the fabrication process. In the numerical optimisation, the yield of nanocellulose was set to a maximum range whereas hydrolysis time, hydrolysis temperature and dosage of oxidant were set in a range between low and high level and dosage of swelling agent was set to an exact value (8%). The desired criteria are summarised in Table 3.

Table 3

| Criteria | Goal | Lower limit | Upper limit |
|---|---|---|---|
| Yield (%) | Maximize | 2.52 | 50 |
| Time (h) | In range | 4 | 5 |
| Temperature (°C) | In range | 60 | 70 |
| Dosage of swelling agent (NaOH) (%) | Equal to | 8 | 8 |
| D-Dosage of oxidant (NaClO) (%) | In range | 70 | 87 |

Table 4 shows three software-generated optimum conditions of independent variables with the predicted values of responses. Solution number 1 that has the maximum desirability value was selected as the optimum conditions of nanocellulose fabrication. To validate the model adequately, fabrication using these conditions was carried out and the yield of nanocellulose was 47.79 %. The experimental value obtained was in good agreement with the value predicted from the models.

Table 4

| Number | Time (h) | Temperature (°C) | NaOH (%) | NaClO (%) | Yield (%) | Desirability |
|---|---|---|---|---|---|---|
| 1 | 5 | 67 | 8 | 70 | 48.0049 | 0.958 |
| 2 | 4.97 | 66.99 | 8 | 70 | 47.95 | 0.957 |
| 3 | 4.92 | 66.82 | 8 | 70 | 47.8628 | 0.955 |

Example 2

This Example looks at the effect of the dosage of NaOH. In order to optimise the addition of swelling agent, we investigated the effect of the dosage of swelling agent on the yield of nanocellulose under the same conditions. It can be seen from the Figure 2 that when the addition of swelling agent is 0, 2, 4, 6 and 8%, respectively, the yield of nanocellulose is 38.23%, 44.43%, 54.11%, 49.51% and 47.79%, respectively. Therefore the best yield is obtained when the swelling agent is at a concentration of around 4%.

Example 3

In this Example, the physical (size distribution and zeta potential) and chemical properties of optimised oxidised nanocellulose are examined.

Nanoparticle tracking analysis (NTA) was performed using a digital microscope LM10 System (NanoSight, Salisbury, UK). One millilitre of the diluted sample (concentration 0.001%) was introduced into the chamber by a syringe. The particles of nanocellulose in the sample were observed using the digital microscope. The video images of the movement of particles under Brownian motion were analysed by the NTA version 1.3 (B196) image analysis software (NanoSight Ltd, UK). Each video clip was captured for a total of 22s. The detection threshold was fixed at 100, whereas the maximum particle jump and minimum track length were both set at 10 in the NTA software. For zeta setting, the average EP velocity is -2247nm/s, dielectric constant is 78.5, and the applied voltage is 24V. Zeta potential nanoparticle tracking analysis (Z-NTA) was carried out by using NS500 System (NanoSight, Salisbury, UK). One millilitre of the diluted sample (concentration 0.005%, stored after 2 years) was used.

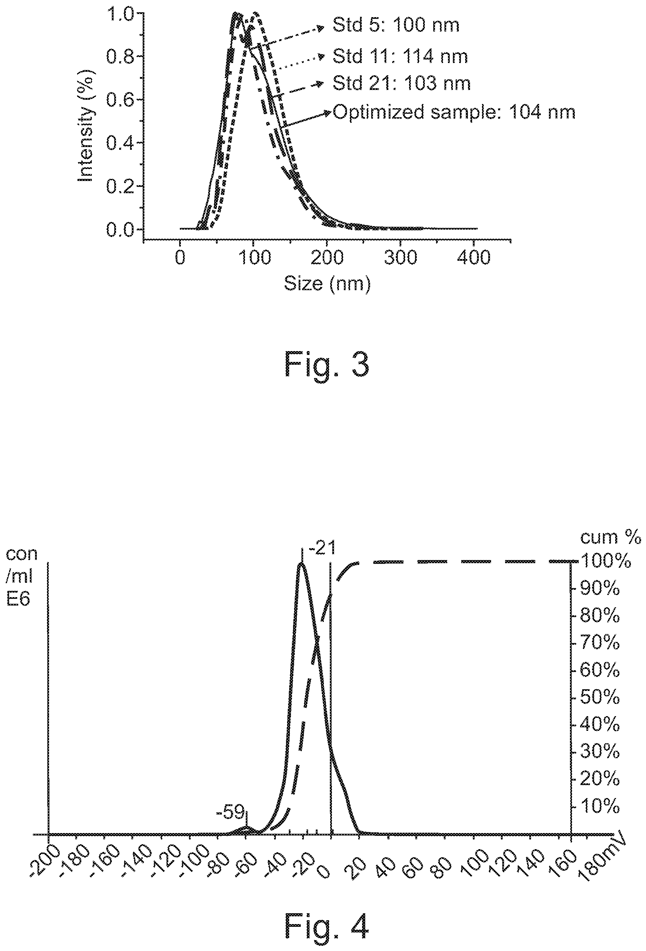

The results of NTA are shown in Figure 3. According to the NTA, the size range of nanocellulose for std5, std11, std21 and the optimised sample, respectively, is 31-281 nm, 38-278nm, 29-321nm and 23-405nm respectively, and the average size of nanocellulose for std5, std11, std21 and optimised samples is 100nm, 112nm, 103nm, and 104nm respectively.

As shown in Figure 4 (which shows the zeta potential of nanocellulose), after two years, the average value of Zeta potential for oxidation/sonication is -14.3mv. Zeta potential is a key indicator of the stability of colloidal dispersions. The stability behaviour of a colloidal system is incipient instability around $\pm$ 10 to $\pm$ 30mv. Even comparing with reported papers (see Table 5, which shows the reported Zeta potential of nanocellulose from various resources and processes), this long stored nanocellulose suspension just displays slight low value. This inspiring result indicates oxidation/sonication process could fabricate a good stability of nanocellulose suspension.

Table 5

| Raw material | Process | Zeta potential (mv) | References |
|---|---|---|---|
| Cotton | Acidic hydrolysis (sulfuric acid) | -45.3 $\pm$ 1.4 | Morais et al. (2013) Carbohyd. Polym. 91,229-35 |
| | Enzymatic hydrolysis (anaerobic microbial) | -15.2 | Satyamurthy & Vigneshwaren (2013) |
| Coir | Oxalic acid / Steam explosion | -18.3 | Abraham et al. (2013) Carbohyd. Polym. 92, 1477-83 |
| Bleached kraft pulp | Refiner | -19.1 $\pm$ 0.1 | Tonoli et al. (2012) Carbohyd. Polym. 89,80-8 |

Hemp yarn and nanocellulose were subjected to a powder X-ray diffraction method analysis (PXRD) respectively. For this analysis, a D8 advanced Bruker AXS diffractometer, Cu point focus source, graphite monochromator and 2D-area detector GADDS system were used. The diffracted intensity of CuK$\alpha$ radiation (wavelength of 0.1542 nm) was recorded between 5° and 40° (2θ angle range, this is the normal range for natural fibre crystallinity analysis with XRD) at 40kV and 40mA. Samples were analysed in transmission mode. The CI was evaluated by using the empirical method described by Segal et al. (1959) Tex. Res. J. 29, 786-94) as follows:

$$CI\% = \frac{(I_{002} - I_{am})}{I_{002}} \times 100$$

where $I_{002}$ is the maximum intensity of diffraction of the (002) lattice peak at a 2θ angle of between 21° and 23°, which represents both crystalline and amorphous materials, and $I_{am}$ is the intensity of diffraction of the amorphous material, which is taken at a 2θ angle between 18° and 20° where the intensity is at a minimum. It should be noted that the crystallinity index is useful only on a comparison basis as it is used to indicate the order of crystallinity rather than the crystallinity of crystalline regions. 10 replicates were used.

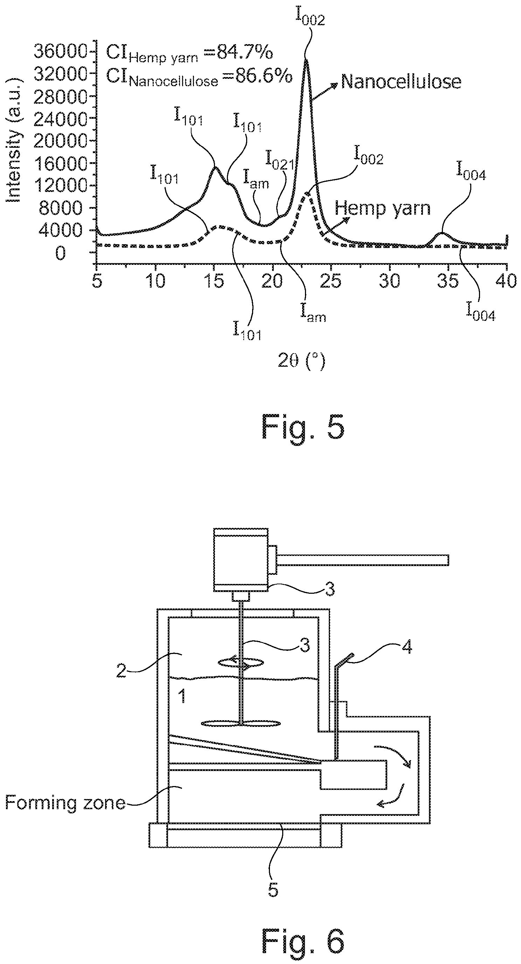

In order to analyse the crystallinity of hemp yarns and nanocellulose, in this chapter, X-ray powder diffraction was carried out. The XRD spectra of hemp yarns and nanocellulose are given in Figure 5, which is an x-ray diffractogram of hemp yarns and nanocellulose. It can be seen from Figure 5 that the major crystalline peak of the hemp yarn and nanocellulose occurred at 2θ=22.977° and 2θ=22.846° respectively, which represents the cellulose crystallographic plane (002, Bragg reflection). The minimum intensity between 002 and 110 peaks ($I_{am}$) for hemp yarn and nanocellulose is at 2θ=18.8588° and 2θ=19.4458° respectively. The CI of hemp yarn is 84.7%. Other well-defined peaks present on the X-ray diffractogram of hemp yarn are at 2θ=15.2267°, 2θ=16.6667° and 2θ=34.6163°, while those of nanocellulose are at 2θ= 15.1809°, 2θ=16.4387°, and 2θ=34.5599, respectively. These reflections correspond with the ($\overline{1}$01), (101) and (004) crystallographic planes, respectively. The results of CI determined for hemp yarn and nanocellulose are given in Table 6 which shows the CI of hemp yarns and nanocellulose are 84.66% and 86.59% respectively. For nanocellulose, the higher CI may be due to the removal of hemicellulose and lignin. Compared with the previous reports, the increase of the CI for nanocellulose seems insignificant, but this result confirms that oxidation/sonication could be used to fabricate nano-scale cellulose without damage to the crystalline structure of cellulose.

Table 6

| Samples | 2θ (°) | | Intensity (a.u) | | CI (%) |
|---|---|---|---|---|---|
| | $I_{am}$ | $I_{002}$ | $I_{am}$ | $I_{002}$ | |
| Hemp yarn | 18.8588 | 22.977 | 1673 | 10909 | 84.66 |
| Nanocellulose | 19.4458 | 22.846 | 4658 | 34748 | 86.59 |

Example 4

In this Example, the effect of the novel nanocellulose on the mechanical performance of single fibres was examined. Hemp fibres (1g) were soaked in a beaker (50 ml) which contained 30 ml dodecyltrimethylammonium bromide (DTAB) solution with various dosages of DTAB under various pH values (see Table 7).

Table 7

| Experiments | pH | Dosage of DTAB (%) |
|---|---|---|
| D1 | 10 | 0.05 |
| D2 | 10 | 0.1 |
| D3 | 10 | 0.15 |
| D4 | 11 | 0.05 |
| D5 | 11 | 0.1 |
| D6 | 11 | 0.15 |
| D7 | 12 | 0.05 |
| D8 | 12 | 0.1 |
| D9 | 12 | 0.15 |

The beaker was then loosely covered with a glass and supported in an ultrasonic bath at 60 °C for 1 hour. Then the hemp fibres were washed with distilled water. After DTAB pretreatment, the modified hemp fibres (P1) were soaked in a beaker (30 ml) which contained 2% nanocellulose suspension at 25°C for 10min. Then, the nanocellulose modified hemp fibres were dried in a vacuum oven at 70°C for 24h. Then, the dried fibres were conditioned at $20\pm2$°C and $65\pm2$% relative humidity before testing.

The mechanical properties of hemp fibres with various treatments are summarised in Table 8.

Table 8

| Experiments | Modulus (GPa) | Tensile stress (MPa) | Tensile strain (%) |
| --- | --- | --- | --- |
| Unmodified | 28.29 | 696.68 | 2.29 |
| DTAB (pH11, 0.1%) | 29.83 | 735.29 | 2.47 |
| D1 (pH10, DTAB 0.05%) | 39.98 | 917.76 | 3.09 |
| D2 (pH10, DTAB 0.1 %) | 39.10 | 1060.39 | 3.33 |
| D3 (pH10, DTAB 0.15 %) | 36.34 | 994.93 | 3.39 |
| D4 (pH11, DTAB 0.05 %) | 38.88 | 1087.94 | 3.54 |
| D5 (pH11, DTAB 0.1 %) | 38.51 | 1203.85 | 3.84 |
| D6 (pH11, DTAB 0.15 %) | 44.99 | 1124.20 | 3.06 |
| D7 (pH12, DTAB 0.05 %) | 32.21 | 934.22 | 3.27 |
| D8 (pH12, DTAB 0.1 %) | 37.79 | 1190.39 | 3.62 |
| D9(pH12, DTAB 0.15 %) | 33.01 | 1006.93 | 3.43 |

As shown in Table 8, the nanocellulose modification increases the mechanical properties of hemp fibres significantly. By comparing with un-modification, DTAB pretreatment increases the modulus, tensile stress and tensile strain of hemp fibres by 5.44%, 5.54% and 7.86% respectively; and the two-step treatment, under the condition pH 11 and dosage of DTAB 0.1%, can increase the modulus, tensile stress and tensile strain of hemp fibres are increased by 36.13%, 72.80% and 67.69% respectively. This indicates that the nanocellulose modification can increase the mechanical properties of hemp fibres significantly. Compared with the previous works which used alkalisation or grafting modification, the nanocellulose modification still displays more significant reinforcement on the mechanical properties of natural fibres. As deformation is the weakest link in natural fibres, the increase of mechanical properties may be due to the "repair" of deformation in the fibres.

Example 5

In this Example, work based on the funding and cooperation of RSDD of Brunel and Smithers Pira was carried out to examine the potential application of this novel nanocellulose on the papermaking industry.

The fibres (five kinds of fibres were used: office waste (Office W); old newsprint (ONP); old corrugated case (OCC); unbleached softwood kraft pulp (UBSK); bleach hardwood kraft pulp (BHK)) were dispersed at approximately 4% consistency (solids content) in tap water using a high-shear stirrer with a toothed impeller in a plastic dustbin. The material was torn into small pieces before dispersion to reduce the load on the stirrer. No sodium hydroxide or wetting agents were added. The nanocellulose was added to the pulp, diluted to 0.5% throughout for all types of old fibres, immediately before sheet formation and after any other additions (the addition of nanocellulose is 2%, by the weight of dried fibres). Circular handsheets were formed using the apparatus shown in Figure 6. The sample of pre-diluted stock (fibre suspension 1) was placed in the upper chamber 2 and re-dispersed with the stirrer 3. The gate valve 4 was opened and the stock moves down and across the forming wire 5. The drainage valve (not shown) beneath the wire 5 was opened and when de-watering was complete, the forming unit was removed from the forming wire 5. A rectangular blotter was placed on the wet handsheet on the wire 5 and pressed with a heavy metal roller. The blotter and handsheet were then peeled from the wire 5. A series of 10 handsheets and blotters were placed in contact with polished metal discs in a pile or stack and pressed with additional blotters in a pneumatic press. The handsheets were thus attached to the discs which provided restraint in drying at room temperature, the discs being mounted in open rings or 'tambourines'. After drying, the handsheets were detached from the discs and conditioned at 23°C, 95% RH for 24 hours before testing. These handsheet making and testing procedures are normal for paper industries and were contracted to Smithers Pira by Brunel University.

Table 9 shows a comparison of changes for office waste, old newsprint, old corrugated case unbleached and bleached kraft samples.

Table 9

| Property | Office W | ONP | OCC | UBSK | BHK |
|---|---|---|---|---|---|
| Bulk | / | / | / | NSC | 7% loss |
| Tensile strength | 25.55% increase | 19.05% increase | 11.11% increase | 19.51% increase | 15.11% increase |
| TEA | 110.69% increase | 40.93% increase | 27.72% increase | NSC | NSC |
| SCT 23/50 | / | / | / | 38% increase | NSC |
| SCT 30/98 | / | / | / | NSC | NSC |
| % Stretch | 41.18% increase | 25% increase | NSC | NSC | NSC |
| 'NSC'=No significant change<br>'TEA'=Tensile Energy Absorption<br>'SCT 23/50'=Short Span Compressive Strength was measured at 23 °C, 50% RH<br>'SCT 30/98'=Short Span Compressive Strength was measured at 30 °C, 98% RH | | | | | |

As shown in Table 9, the addition of nanocellulose could increase the tensile strength of paper significantly, it can be concluded that lignin by itself does not inhibit the action of the nanocellulose but the effects of sheet formation and of refining - in terms of fibrillation, conformity, zeta potential and fines content - are crucially important.

Table 10 shows the effects of filler and additives on strength properties of old corrugated case (OCC).

Table 10

| Property | Filler addition | Percoll | AKD | Percoll+AKD |
|---|---|---|---|---|
| Bulk | 5% loss | NSC | 6% icrease | NSC |
| Tensile strength | 48% loss | 75% increase | NSC | 43% increase |
| TEA | 68% loss | 79% increase | 26% loss | 43% increase |
| SCT 23/50 | 41% loss | 85% increase | NSC | 46% increase |
| SCT 30/98 | 34% loss | 56 % increase | NSC | 31% increase |
| % Stretch | 34% loss | 23% increase | NSC | 14% increase |
| 'NSC'=No significant change | | | | |

A nanocellulose-containing sample of OCC material being added with various additives was also carried out. These additives include: 1) calcium carbonate filler; 2) polyacrylamide retention aid (Percoll 292); 3) alkyl ketene dimer (AKD) emulsion and 4) two additives of 2) and 3) together. In the previously described experiment, the fibre was treated with the nanocellulose sometime before the handsheets were formed. On this occasion, the nanocellulose was added to the fibre suspension, after the additives and just before sheet formation. The test results are shown in Table 10. From Table 10, it can be found that the using of the 'Percoll' retention aid had increased strength in all respects, even the SCT values at high humidity. The increases in TEA and stretch suggest an improvement in bond strength and possibly the connectivity and uniformity of the formation. The addition of the AKD sizing agent gave no significant change in strength properties except for a loss of TEA, i.e. lower toughness. 'Percoll' and AKD together gave significant strength increases but not as great as with 'Percoll' addition alone. The very good results with the 'Percoll' imply benefits due to the improved retention of fines and possibly the nanocellulose itself. 'Percoll 292' is a low to medium cationic charge high molecular weight polyacrylamide. It is likely that other retention systems will have similar benefits. The modest cationic charge density of 'Percoll' is in contrast to the high-charge, low molecular weight character of the emulsifier that keeps the

AKD in suspension. The emulsifier may be either a highly modified starch or a polyamine synthetic polymer and its cationicity may have impeded the action of the nanocellulose in the same way as the calcium carbonate filler. The addition of the nanocellulose after the sizing agent may have exacerbated the interaction.

According to the nanocellulose production methods described in this application, nanocellulose can be obtained directly from natural fibres or sawdust particles with high yield, high crystallinity and high stability. As described in Examples 3 and 4, this novel nanocellulose displays significant improvement on the mechanical performance of natural fibres that could be used in composites and papermaking industries.

All optional and preferred features and modifications of the described embodiments and dependent claims are usable in all aspects of the invention taught herein. Furthermore, the individual features of the dependent claims, as well as all optional and preferred features and modifications of the described embodiments are combinable and interchangeable with one another.

The disclosures in United Kingdom application 1417793.5, from which this application claims priority, and in the abstract accompanying this application are incorporated herein by reference.

## Claims

1. A method of producing nanocellulose, including defibrillating cellulosic raw material by simultaneous oxidation and sonication, wherein a swelling agent is present during the oxidation and sonication, the swelling agent including NaOH, wherein the oxidation is carried out using $H_2O_2$ as an oxidant.

2. A method as claimed in claim 1, including isolating the nanocellulose produced.

3. A method as claimed in claim 1 or 2, wherein the oxidant is at a concentration of 10% to 20% by weight of dried fibres of cellulosic raw material.

4. A method as claimed in claim 1, 2 or 3, wherein the swelling agent is included at a concentration of 2% to 16% by weight of dried fibres of cellulosic raw material.

5. A method as claimed in claim 4, wherein the swelling agent is at a concentration of 4%.

6. A method as claimed in any preceding claim, wherein the oxidation and sonication step is carried out at a temperature of at least 55°C or at a temperature of no more than 80°C.

7. A method as claimed in any preceding claim, wherein the oxidation and sonication step is carried out at a temperature within the range from 55°C to 80°C.

8. A method as claimed in any preceding claim, wherein the oxidation and sonication step is carried out from 2 to 6 hours.

9. A method as claimed in any preceding claim, wherein the cellulosic raw material is non-wood lignocellulosic fibres or sawdust.

10. A method as claimed in claim 9, wherein the cellulosic raw material is sawdust having a particle size of less than 60µm.

11. A method as claimed in claim 9, wherein the cellulosic raw material is non-wood lignocellulosic fibres and wherein the fibres have a length of 0.01-2cm.

12. A method as claimed in any preceding claim, wherein the concentration of the cellulosic raw material in the oxidation reaction solution is 5% (w/w) or less.

13. A method of recycling cellulosic material, including carrying out a method as claimed in any preceding claim to obtain nanocellulose, adding the nanocellulose obtained to a pulp of cellulosic material to be recycled, then forming the pulp into a sheet.

14. A method as claimed in claim 13, wherein the cellulosic material to be recycled is paper, card, cardboard or wood.

15. A method as claimed in claim 13 or 14, wherein the method is a method of producing recycled paper.

## Patentansprüche

1. Verfahren zur Herstellung von Nanocellulose, umfassend Defibrillieren von Cellulose-Rohmaterial durch gleichzeitige Oxidation und Beschallung, wobei während der Oxidation und Beschallung ein Quellmittel vorhanden ist, wobei das Quellmittel NaOH enthält, wobei die Oxidation unter Verwendung von $H_2O_2$ als Oxidationsmittel durchgeführt

wird.

2. Verfahren nach Anspruch 1, umfassend ein Isolieren der erzeugten Nanozellulose.

3. Verfahren nach Anspruch 1 oder 2, wobei das Oxidationsmittel in einer Konzentration von 10 bis 20 Gew.-% getrockneter Fasern des Cellulose-Rohmaterials vorliegt.

4. Verfahren nach Anspruch 1, 2 oder 3, wobei das Quellmittel in einer Konzentration von 2 bis 16 Gew.-% getrockneter Fasern des Cellulose-Rohmaterials umfasst ist.

5. Verfahren nach Anspruch 4, wobei das Quellmittel in einer Konzentration von 4% vorliegt.

6. Verfahren nach einem der vorhergehenden Ansprüche, wobei der Oxidations- und Beschallungsschritt bei einer Temperatur von mindestens 55°C oder bei einer Temperatur von nicht mehr als 80°C durchgeführt wird.

7. Verfahren nach einem der vorhergehenden Ansprüche, wobei der Oxidations- und Beschallungsschritt bei einer Temperatur im Bereich von 55°C bis 80°C durchgeführt wird.

8. Verfahren nach einem der vorhergehenden Ansprüche, wobei der Oxidations- und Beschallungsschritt von 2 bis 6 Stunden durchgeführt wird.

9. Verfahren nach einem der vorhergehenden Ansprüche, wobei das Cellulose-Rohmaterial Nicht-Holz-Lignocellulose-Fasern oder Sägemehl ist.

10. Verfahren nach Anspruch 9, wobei das Cellulose-Rohmaterial Sägemehl mit einer Partikelgröße von weniger als 60 $\mu$m ist.

11. Verfahren nach Anspruch 9, wobei das Cellulose-Rohmaterial Nicht-Holz-Lignocellulose-Fasern ist und wobei die Fasern eine Länge von 0,01-2 cm haben.

12. Verfahren nach einem der vorhergehenden Ansprüche, wobei die Konzentration des Cellulose-Rohmaterials in der Oxidationsreaktionslösung 5% (w/w) oder weniger beträgt.

13. Verfahren zum Recyceln von Cellulosematerial, umfassend ein Durchführen eines Verfahrens, wie in einem der vorhergehenden Ansprüche beansprucht, zum Erhalten von Nanocellulose, Zugeben der erhaltenen Nanocellulose zu einer Pulpe (einem Zellstoff) aus wiederzuverwertendem Cellulosematerial und anschließendes Formen der Pulpe (des Zellstoffs) zu einem Blatt.

14. Verfahren nach Anspruch 13, wobei das zu recycelnde Cellulosematerial Papier, Pappe, Karton oder Holz ist.

15. Verfahren nach Anspruch 13 oder 14, wobei das Verfahren ein Verfahren zur Herstellung von Recyclingpapier ist.

## Revendications

1. Procédé de production de nanocellulose, comprenant la défibrillation d'une matière première cellulosique par oxydation et sonication simultanées, dans lequel un agent de gonflement est présent pendant l'oxydation et la sonication, l'agent de gonflement comprenant NaOH, l'oxydation étant effectuée à l'aide de $H_2O_2$ comme oxydant.

2. Procédé selon la revendication 1, comprenant l'isolement de la nanocellulose produite.

3. Procédé selon l'une des revendications 1 ou 2, dans lequel l'oxydant est à une concentration de 10 % à 20 % en poids de fibres séchées de matière première cellulosique.

4. Procédé selon l'une des revendications 1, 2 ou 3, dans lequel l'agent de gonflement est compris à une concentration de 2 % à 16 % en poids de fibres séchées de matière première cellulosique.

5. Procédé selon la revendication 4, dans lequel l'agent de gonflement est à une concentration de 4 %.

**6.** Procédé selon l'une quelconque des revendications précédentes, dans lequel l'étape d'oxydation et de sonication est effectuée à une température d'au moins 55°C ou à une température de pas plus de 80°C.

**7.** Procédé selon l'une quelconque des revendications précédentes, dans lequel l'étape d'oxydation et de sonication est effectuée à une température dans la plage de 55°C à 80°C.

**8.** Procédé selon l'une quelconque des revendications précédentes, dans lequel l'étape d'oxydation et de sonication est effectuée pendant de 2 à 6 heures.

**9.** Procédé selon l'une quelconque des revendications précédentes, dans lequel la matière première cellulosique consiste en des fibres lignocellulosiques non de bois ou de la sciure de bois.

**10.** Procédé selon la revendication 9, dans lequel la matière première cellulosique est de la sciure de bois ayant une dimension de particule de moins de 60 $\mu$m.

**11.** Procédé selon la revendication 9, dans lequel la matière première cellulosique consiste en des fibres lignocellulosiques non de bois et dans lequel les fibres ont une longueur de 0,01 à 2 cm.

**12.** Procédé selon l'une quelconque des revendications précédentes, dans lequel la concentration de la matière première cellulosique dans la solution de réaction d'oxydation est de 5 % (p / p) ou moins.

**13.** Procédé de recyclage de matériau cellulosique, comprenant la mise en œuvre d'un procédé selon l'une quelconque des revendications précédentes pour obtenir de la nanocellulose, l'addition de la nanocellulose obtenue à une pâte de matériau cellulosique à recycler, puis la transformation de la pâte en une feuille.

**14.** Procédé selon la revendication 13, dans lequel le matériau cellulosique à recycler est le papier, le carton, le carton compact ou le bois.

**15.** Procédé selon l'une des revendications 13 ou 14, dans lequel le procédé est un procédé de production de papier recyclé.

Fig. 1

Fig. 2

Fig. 3

Fig. 4

Fig. 5

Fig. 6

## REFERENCES CITED IN THE DESCRIPTION

### Patent documents cited in the description

- US 4341807 A
- US 4378381 A
- JP 2008001728 A
- WO 2009021688 A
- GB 1417793 A

### Non-patent literature cited in the description

- **NICKERSON.** *Industrial & Engineering Chemistry Analytical Edition,* 1941, vol. 13, 423-6
- **BONDESON et al.** *Cellulose,* 2006, vol. 13, 171-80
- **SHARMA et al.** *RSc. Adv.,* 2012, vol. 2, 6424-37
- **JIANG ; HSIEH.** *Carbohyd. Polym,* 2013, vol. 95, 32-40
- **STENSTAD et al.** *Cellulose,* 2008, vol. 15, 35-45
- **MONTANARI et al.** *Macromolecules,* 2005, vol. 38, 1665-71
- **BESBES et al.** *Carbohyd. Polym.,* 2011, vol. 84, 975-83
- **HENRIKSSON et al.** *Eur. Polym. J.,* 2007, vol. 43, 3434-41
- **SATYAMURTHY ; VIGNESHWARAN.** *Enzyme Microb. Tech.,* 2013, vol. 52, 20-5
- **MORAIS et al.** *Carbohyd. Polym.,* 2013, vol. 91, 229-35
- **ABRAHAM et al.** *Carbohyd. Polym.,* 2013, vol. 92, 1477-83
- **TONOLI et al.** *Carbohyd. Polym.,* 2012, vol. 89, 80-8
- **SEGAL et al.** *Tex. Res. J.,* 1959, vol. 29, 786-94